# EUROPÄISCHE PATENTSCHRIFT

(11) **EP 0 642 744 B1**
(45) Veröffentlichungstag und Bekanntmachung des Hinweises auf die Patenterteilung: **22.10.1997**
(21) Anmeldenummer: 93112684.1
(22) Anmeldetag: 07.08.1993
(51) Int. Cl.: A23L 2/02

(54) **Verfahren zur Herstellung von trubstabilen, naturtrüben Fruchtgetränken sowie danach hergestelltes Fruchtgetränk**
Process for preparing of fruit beverages with a stable natural cloud and fruit juices prepared accordingly
Procédé de préparation de boissons aux fruits ayant au trouble naturel et stable ainsi que les jus de fruits ainsi préparés

(43) Veröffentlichungstag der Anmeldung: 15.03.1995
(73) Patentinhaber: Eckes Aktiengesellschaft, D-55268 Nieder-Olm (DE)
(72) Erfinder: Kolb, Erich, Dr., D-55268 Nieder-Olm (DE); Neuhäuser, Karl, Dr., D-55291 Saulheim (DE)
(74) Vertreter: Schubert, Siegmar, Dipl.-Ing.

(56) Entgegenhaltungen:
- EP-A- 0 118 034
- WO-A-91/06226
- WO-A-91/15968
- WO-A-92/00679
- WO-A-92/03067
- DE-A- 1 492 982
- US-A- 3 518 093

## Beschreibung

Die Erfindung betrifft ein Verfahren zur Herstellung von naturtrüben Fruchtgetränken (insb. naturtrüben Kernobstgetränken), wobei mindestens zwei Komponenten deutlich unterschiedlichen Trubgehaltes gemischt werden.

Erfindungsgemäß handelt es sich bei der einen Komponente entweder um ein durch Ganzfruchtverarbeitung des eßbaren Anteils erhaltenes Erzeugnis (im folgenden Ganzfruchtzubereitung genannt) oder um einen stark trüben Fruchtsaft, während die zweite Komponente ein nach konventionellem Verfahren hergestelltes handelsübliches Fruchtsaftkonzentrat (schwach trüb bzw. blank) darstellt.

Naturtrübe Kernobstgetränke und hierunter insbesondere naturtrübe Apfelsäfte erlangten in den letzten Jahren zunehmende Marktbedeutung. Die konventionellen Herstellverfahren sind in der Literatur ausführlich beschrieben, wobei auf aktuelle Übersichtsartikel verwiesen wird (Wyckoff D., Confructa Studien 36, 85-91, 1992; Welter C.C. et al., Flüssiges Obst 58, 230-233, 1991).

Auch das ideale qualitative Erscheinungsbild eines naturtrüben Apfelsaftes wird mehrfach und zwar wie folgt beschrieben (Nagel B., Flüssiges Obst 59, 6-8, 1992; Binnig;R., Flüssiges Obst 59, 540-544, 1992):
- Geruch:: aromatisch, kräftig ausgeprägtes Fruchtaroma
- Geschmack:: fruchtig, harmonisch, ausgeglichen im Zucker - Säure-Verhältnis
- Farbe:: hell;
- Farbstabilität:: ohne deutliche Nachdunklung
- Trub:: deutlich wahrnehmbar, gleichmäßig verteilt
- Trubstabilität:: ohne nennenswerten Trubabsatz (Depot)

Die wichtigsten Schritte der bisher bekannten Verfahren zur Herstellung von naturtrüben Kernobstsäften werden nachfolgend kurz beschrieben:

Die Verarbeitung des Obstes zu Säften beginnt nach dem Lagern, Waschen und Sortieren der Früchte mit dem Zerkleinerungsprozeß, meist in einer Rätzmühle. Die dabei erhaltene, in einem Vorratsbehälter aufgefangene Maische wird dann meist durch Pumpen in Pressen unterschiedlicher Konstruktionen gefördert. Es finden generell unterschiedliche Presssysteme Verwendung wie z.B. Horizontalpressen, Bandpressen und Packpressen. Ziel ist dabei in allen Fällen die weitgehende Freisetzung des Saftes durch Anwendung von Druck unter weitgehender Zurückhaltung der Feststoffe durch Filterwirkung (auch des Preßkuchens). Zur Saftabtrennung können auch Dekanter eingesetzt werden. Dabei handelt es sich um horizontal gelagerte Schneckenzentrifugen für die kontinuierliche Abscheidung von Feststoffen aus Suspensionen.

Zur Erhaltung einer hellen Farbe während des Prozesses und zur Vermeidung einer späteren Nachdunklung wird meist entweder in die Maische oder in den frisch gepreßten Saft Ascorbinsäure zugegeben. Nach dem Pressen wird der Saft je nach Erfordernis zentrifugiert (zur Teilabtrennung des leicht sedimentierbaren Trubes), ggf. entaromatisiert oder konzentriert und durch Erhitzen eingelagert. (Ein Erhitzungsschritt ist zur Inaktivierung von nativ vorhandenen Enzymen und zum Abtöten vorhandener Mikroorganismen in allen Fällen erforderlich).

Weitergehende Entwicklungen, die direkt die Herstellung naturtrüber Kernobstsäfte betreffen und mit der Erfindung in Zusammenhang gebracht werden können, werden anhand der Patentliteratur im folgenden beschrieben:

In WO 92/03067 wird beschrieben, daß die gewonnene Maische in einer Vollmantelschneckenzentrifuge in Fruchtfleischteile und Saft aufgetrennt wird, wobei darauf abgehoben wird, daß dieser Trennvorgang zeitlich unmittelbar nach dem Zerkleinern der Früchte erfolgt und daß ebenfalls unmittelbar nach dem Trennvorgang eine Inaktivierung fruchteigener Enzyme durch Erhitzung des Saftes erfolgt. Durch dieses Verfahren soll die Herstellung naturtrüber Säfte ohne enzymatische Veränderungen von Fruchtinhaltsstoffen möglich werden.

Die EP 0118034 B1 beschreibt ein weiteres, allgemeines Verfahren zur Herstellung eines Fruchtsaftgetränkes mit darin enthaltenem festen Material, welches dadurch erhalten wird, daß man einen festes Material enthaltenden Fruchtsaft zur Verringerung der maximalen Längenausmessung der Teilchen des festen Materials einem Mahlprozeß unterwirft, anschließend entlüftet und homogenisiert.

Die US 5,202,142, EP 477 323, CH 679 546 A5 und WO 91/15968 beschreiben ein Verfahren zur Herstellung von trubstabilen trüben Säften aus pflanzlichen Produkten, wonach der Rohsaft in einer Ultrafiltrationsanlage geklärt wird und als kaltsteriler Klarsaft mit dem Filterrückstand einer cross-flow-Filtration gemischt wird. Hierbei dient der Filterrückstand als Trübungsmittel, welcher vor Einmischen in einer Zerkleinerungsvorrichtung mechanisch feinstzerkleinert wird. Neben dem Filter-Rückstand werden in die Mischvorrichtung auch noch (Trub-)Stabilisierungsmittel eingebracht, um die Agglomeration der feinstzerkleinerten Partikel zu verhindern. Durch die Gesamtheit der dort beschriebenen Maßnahmen soll eine hohe Trubstabilität des trüben Saftes erreicht werden.

JP 59-25674 (A) beschreibt ebenfalls die Herstellung eines pulpehaltigen Saftes. Danach wird Obst oder Gemüse in feine Stücke mit einer Größe von <5mm (bevorzugt 2-3mm) geschnitten und in eine wäßrige Lösung getaucht, welche 0,05 - 0,5% (bevorzugt 0,1 - 0,2%) pflanzengewebeabbauender Enzyme wie Cellulasen, Pectinasen oder Endo-pectinasen enthält. Dies erfolgt bei 35-55°C, bis lediglich die obere Schicht der Stücke aufgeweicht ist; gewöhnlich 1-60 min. (bevorzugt 3-10 min.). Um ein Bräunen zu verhindern ist eine Zugabe von 0,05 - 0,2 % von Ascorbinsäure vorzuziehen. Um einen pulpehaltigen Saft zu erhalten, wird das Gewebe nach einem "Trocknen" einem konventionellen Frucht- oder Gemüsesaft in entsprechender Menge (z.B. 5-20 %) zugegeben und hitzesterilisiert.

In der JP 62-259568 (A) wird die Herstellung von naturtrübem Apfelsaft und Apfelpüree ohne Verwendung von Zusatzstoffen beschrieben, indem das Zerkleinern und Pressen der Äpfel in einer sauerstofffreien Atmosphäre oder in einer Atmosphäre mit niedrigem Sauerstoffgehalt erfolgt.

Weitere Beispiele für Verfahren, die im vorliegenden Zusammenhang von Interesse sind, befassen sich auch mit einer Enzymierung der durch Fruchtzerkleinerung erhaltenen Maische (WO 91/06226). Eine Enzymierung der Maische eignet sich jedoch bei Kernobst überwiegend nur zur Herstellung blanker Säfte resp. Konzentrate. Bei trüben Apfelsäften, zumindest nach bisheriger Kenntnis, führt eine Enzymierung meist zu einer Verschlechterung der Trubstabilität. Lediglich für den Einsatz einer sauren Protease ist eine im Technikums- und Großmaßstab erreichbare Steigerung nicht nur der Trubausbeute, sondern auch der Trubstabilität beschrieben worden (Dissertation; S.Stähle-Hamatschek; Institut für Lebensmitteltechnologie, Universität Hohenheim; 1989).

In einer bereits erwähnten Übersichtsarbeit (Wyckoff,D. Confructa Studien 36, 85-91, 1992) werden für die Herstellung eines Trübsaftkonzentrat von 42 Grad Brix verschiedene Möglichkeiten erwähnt; einmal die direkte Konzentrierung eines Direktsaftes (single strength juice) auf 42 Grad Brix, oder die Mischung eines 60-70 Grad Brix klaren Konzentrates mit 25-30 Grad Brix trüben Konzentrates. Von dieser Druckschrift geht die Erfindung aus.

Ein Aufsatz von S. Stähle-Hamatschek, erschienen in Flüssiges Obst, 56, 543-558 (1989), erwähnt schon, daß bei der Herstellung trubstabiler Apfelsäfte begrenzte Maischestandzeiten möglich sind (bis zu fünf Stunden), die die Trübungsstabilität positiv beeinflussen.

Demgegenüber liegt der Erfindung die Aufgabe zugrunde, ein Verfahren vorzuschlagen, mit dem preisgünstiger naturtrübe, trubstabile Fruchtgetränke hergestellt werden können, und bei denen, verglichen mit nach heutigen Standardverfahren hergestellten derartigen Fruchtgetränken, die typischen Qualitätskriterien, wie chemische Zusammensetzung, Sensorik, Trubmenge, Trubstabilität, Farbe, Farbstabilität, Lagerstabilität u.a. weitgehend unverändert bleiben.

Die Lösung dieser Aufgabe erfolgt durch die Merkmale von Patentanspruch 1.

Die vorliegende Erfindung betrifft somit ebenfalls ein Verfahren zur Herstellung naturtrüber Fruchtgetränke und hierbei insbesondere naturtrüber Kernobstsäfte, wobei jedoch ein anderer Weg als bisher beschrieben eingeschlagen wird.

Grundgedanke ist, das auf dem nationalen und internationalen Markt handelsüblich in größeren Mengen preisgünstiger verfügbare Kernobstsaftvollkonzentrat (blank oder schwach getrübt; im folgenden "trubarm" genannt) mit zur Herstellung naturtrüber Säfte heranzuziehen. Um ein den o.g.Qualitätskriterien entsprechendes Fruchtgetränk mit deutlich wahrnehmbarer stabiler Trübung zu erhalten, ist dann die Mitverwendung eines stark trubhaltigen Fruchtproduktes bzw. die Vermischung mit einem im folgenden "Trubkomponente" genannten Produktes erforderlich.

Für diese Trubkomponente bieten sich generell zwei, auf verschiedenen Wegen erhaltene Produkte an.

Einmal kommt ein durch spezielle Verfahren erhaltener stark trüber Saft zum Einsatz. Durch geeignete Auswahl der Rohware und der Verfahrensparameter kann dabei ein deutlich über dem Durchschnitt liegender Trubgehalt im Produkt erzielt werden. In den Versuchen hat sich gezeigt, daß vor allem Lagerobst bestimmter Sorten besonders geeignet ist, wobei zusätzlich eine verlängerte Standzeit (und daraufhin optimierte Temperatur) nach dem Maischen der Früchte von Bedeutung ist und zu einer weiteren deutlichen Erhöhung der Ausbeute an stabilem Trub führt.

Zum anderen kann als Trubkomponente nicht Saft, sondern eine Ganzfruchtzubereitung eingesetzt werden, welche nicht durch Pressen oder mittels Dekanter, sondern durch Passieren erhalten wird. Bei dieser Variante wird man die teurere Trubkomponente in geringeren Anteilen einsetzen. S. Anspruch 6.

Überraschenderweise hat sich gezeigt, daß ein Vermischen einer dieser beiden verschiedenartigen Trubkomponenten mit dem trubarmen Anteil (Konzentrat) zu naturtrüben Fruchtgetränken führt, die den beschriebenen Qualitätskriterien und hier insbesondere hinsichtlich der Trubstabilität entsprechen. Mit anderen Worten: es kommt nicht zu der eigentlich zu erwartenden Instabilität, das heißt Ausbildung eines nahezu klaren Überstandes und einem Absetzen des Großteiles des eingebrachten Trubes. (Dies ist gerade aufgrund der eigenen Erfahrungen mit Verschnitten naturtrüber Säfte nicht unbedingt zu erwarten gewesen. Verschnitte stark unterschiedlicher Komponenten führen sehr oft zu einer deutlichen Änderung der Trubstabilität).

Auch in US 5,202,142 wird zwar die Vermischung eines Klarsaftes mit einem Trubprodukt zur Herstellung eines trüben, trubstabilen Saftes beschrieben (s.o.), wobei dort jedoch eine Klärung des Rohsaftes in einer Ultrafiltrationsanlage erfolgt und der Klarsaft mit dem Filterrückstand einer Querstromfiltration vermischt wird. Des weiteren werden hier zur Erreichung der Trubstabilität neben dem Filterrückstand auch noch Stabilisierungsmittel eingebracht. Die vorliegende Erfindung hat für die eingesetzten Trubkomponenten keine weiteren Trennungsschritte, insbesondere nicht durch Filteranlagen, wie Ultrafiltrationsanlagen resp. Querstromfiltration und verzichtet außerdem bewußt auf den Zusatz von Trubstabilisierungsmitteln.

In der bereits zitierten Arbeit von Wyckoff (s.o.) ist zwar ohne detaillierte Angaben ebenfalls die Vermischung eines klaren Konzentrates von 60-70 Grad Brix mit einem konzentrierten Trubsaft (25-30 Grad Brix) kurz erwähnt, mit dem Ziel ein trübes Konzentrat von 42 Grad Brix herzustellen. Die entscheidenden Angaben hinsichtlich Trubmenge und Trubstabilität der so hergestellten Produkte fehlen hier jedoch vollständig. Auch werden hier zwei Konzentrate gemischt, was im deutlichen Unterschied zu der vorliegenden Erfindung steht, wo zumindest eine Komponente (Trubkomponente) nicht konzentriert eingesetzt wird, was zu einer Vereinfachung des Verfahrens führt.

### Anwendungsbeispiele:

### Beispiel 1:

### Durchführung der Trübungs- und Trubstabilitätsmessungen

Auch wenn in der Literatur die Begriffe Trübung und Trubstabilität vielfach Verwendung finden, werden sie in den meisten Fällen nicht durch physikalische Meßgrößen konkretisiert. Für die vorliegende Erfindung wurde auf eine quantifizierbare Aussage hinsichtlich dieser Meßgrößen besonderer Wert gelegt.

### a) Trübungsmessung

Die Messung erfolgt in 1 cm Küvetten mit einem Trübungsphotometer (z.B. Dr.Lange Turbitymeter LTP 4) im Vergleich zu einem internationalen Trübungsstandard (Formazin). Die gemessene Trübung orientiert sich an diesem Standard und wird ausgedrückt in TE/F (Trübungseinheiten/Formazin) resp. der identischen Meßgröße FNU (formazine nephelometric units). Bei den Messungen ist darauf zu achten, daß für Proben von über 900 TE/F eine Verdünnung zu erfolgen hat und die Eichung des Gerätes dem aktuellen Meßbereich entspricht.

### b) Trübungsstabilität

Um Aussagen Ober das Trübungsverhalten während der Lagerung des Endproduktes zu erhalten wurde ein Zentrifugationstest angewandt, wie er speziell für naturtrübe Apfelsäfte entwickelt wurde (S.Stähle-Hamatschek, Flüssiges Obst 56, 543-558, 1989). Die dabei erhaltene Größe delta Tz(%) gibt bereits bei der Herstellung eines naturtrüben Saftes einen Hinweis auf den während der Lagerung tatsächlich eintretenden Trübungsverlust. Je größer delta Tz(%) desto größer ist dieser Trübungsverlust. Bei genauer Halbierung des ursprünglichen Trübungswertes während der Lagerung ergibt sich ein delta Tz-Wert von 50%.

Anmerkung: Für naturtrübe Apfelsäfte des Handels (eigene Untersuchungen durchgeführt an 12 Produkten in 1992;) ergeben sich folgende Schwankungsbreiten:

| | | anzustrebender Sollbereich: |
|---|---|---|
| Trübung: | 215 - 1150 TE/F | 400 -800 TE/F |
| Trubstabilität (delta Tz): | 49 - 82 % | < 60% |

### Beispiel 2:

Herstellung eines naturtrüben Apfelsaftes unter Verwendung von stark trübem Apfelsaft (als Trubkomponente) und Apfelsaftkonzentrat (71° Brix).

### a) Herstellung der Trubkomponente

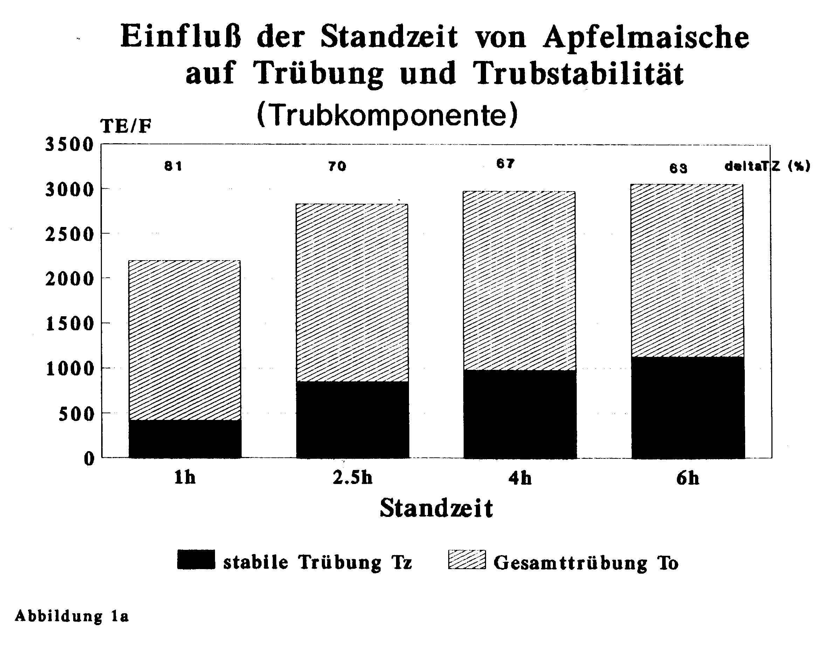

Je ca.4 kg Äpfel (gleichmäßiges Gemisch der Sorten Jonathan und Elstar;) werden nach dem Waschen in einer Rätzmühle gemahlen und nach Zugabe von 0,15% Ascorbinsäure (in Apfelsaft gelöst) ohne Rühren bei ca.20°C definierte Zeiten stehen gelassen. Nach einer Standzeit von jeweils 1; 2,5; 4 und 6 Stunden wird die Maische in einer Packpresse gepreßt, der abgetrennte stark trübe Saft im Vakuum entgast, bei der gewählten Versuchsgröße in Flaschen gefüllt und bei 85°C pasteurisiert. In allen Fällen ergab sich eine Trübung des Saftes zwischen 2200 und 3200 TE/F, wobei verlängerte Standzeiten zu einer Erhöhung der Trubausbeute im Saft und insbesondere zu einer deutlichen Erhöhung des Anteils an stabilem Trub führen. Die Werte für die Trubstabilität (delta Tz) der Trubkomponente verbessern sich durch die Standzeit von 81% (1 h Standzeit) auf 63% (6 h Standzeit); (siehe Abbildung 1a).

### b) Verschnitt mit trubarmer Komponente

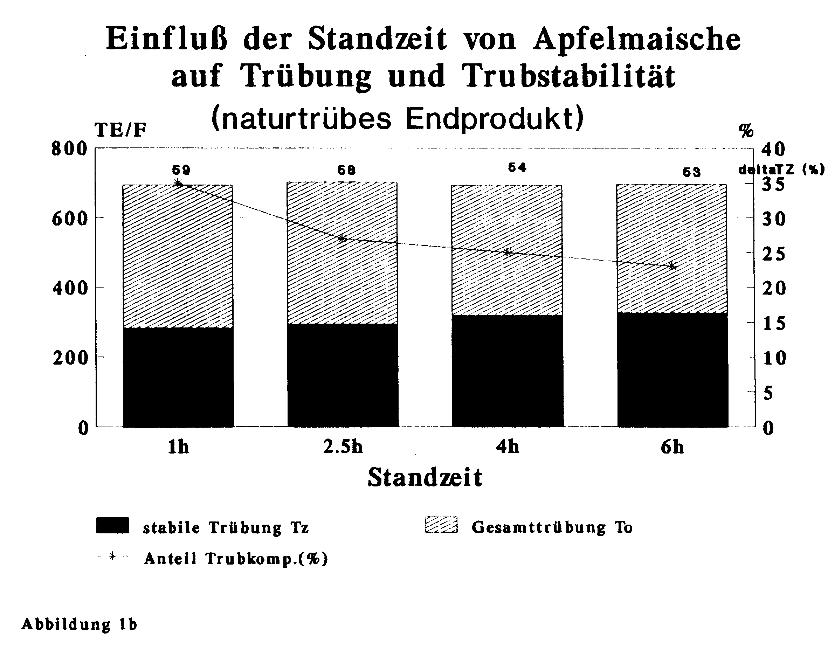

Die unter a) hergestellten trubreichen Säfte werden zur weitgehenden Abtrennung des instabilen Trubes zentrifugiert und mit Apfelsaftkonzentrat (71°Brix; handelsübliche Ware) mit einer Trübung von ca. 10 TE/F unter Mitverwendung von Apfelsaftaroma, geeignetem Wasser und 500 mg/l Ascorbinsäure auf Trinkstärke von ca. 12,8°Brix ausgemischt. Die Trübung des Endproduktes liegt bei ca. 650 TE/F, die Werte für Trubstabilität zwischen 53 und 59%. Der für die Einstellung des Trubes erforderliche Anteil an der Trubkomponente liegt, abhängig von der Standzeit unter a) zwischen 23 und 35% (s.a. Abbildung 1b).

### Beispiel 3:

Herstellung eines naturtrüben Apfelsaftes unter Verwendung einer Apfelganzfruchtzubereitung (als Trubkomponente) und Apfelsaftkonzentrat (71°Brix)

### a) Herstellung der Trubkomponente

25 kg Äpfel (gleichmäßiges Gemisch der Sorten Gloster und Boskoop) werden nach dem Waschen in einer Rätzmühle gemahlen und nach Zugabe von 0,15% Ascorbinsäure (in Apfelsaft gelöst) ohne Rühren bei ca. 20°C für 90 min stehen gelassen. Anschließend wird die gesamte Maische durch ein Sieb mit 2 mm Lochgröße passiert. Das erhaltene Mus wird zur besseren Fließfähigkeit mit der gleichen Menge an geeignetem Wasser versetzt; im Vakuum entgast, mittels Röhrenwärmetauscher auf 88°C erhitzt und nach Rückkühlung steril eingelagert.

### b) Verschnitt mit trubarmer Komponente

Die unter a) hergestellte, mit Wasser versetzte Ganzfruchtzubereitung wird zur Zerkleinerung der vorhandenen Trubteilchen mittels eines Naßzerkleinerungsverfahrens (hier Ultraturrax) homogenisiert (Teilchengröße < 100 µm) und zur Abtrennung des instabilen Trubes separiert. Anschließend wird mit Apfelsaftkonzentrat (handelsübliche Ware; 71°Brix) mit einer Trübung von 10 TE/F unter Mitverwendung von Apfelsaftaroma, geeignetem Wasser und 300 mg/l Ascorbinsäure auf Trinkstärke von 12,4°Brix ausgemischt. Die Trübung des Endproduktes liegt bei 651 TE/F. Der Wert für die Trubstabilität (delta Tz) liegt bei 45% und damit besser als in den Proben des Handels (s.o.). Der für die Einstellung des Trubes erforderliche Anteil der unverdünnten Trubkomponente liegt bei 19,7%.

Über die Lagerzeit von 15 Monaten ergibt sich eine leichte Reduzierung der stabilen Trübung und ein leichter Trubabsatz. Es ist jedoch keine Ausklarung des Produktes zu beobachten. Die Art und Menge dieses Trubabsatzes ist mit konventionell hergestelltem naturtrüben Apfelsaft vollkommen vergleichbar (liegt, wie oben erwähnt sogar tendenziell besser). Auch dort gelingt es bislang ohne Zugabe von Trubstabilisierungsmitteln nicht einen Trubabsatz völlig zu verhindern.

### Beispiel 4:

Herstellung eines naturtrüben Apfelnektars (Saftgehalt 50%) unter Verwendung einer Apfelganzfruchtzubereitung (als Trubkomponente) und Apfelsaftkonzentrat (71°Brix)

### a) Herstellung der Trubkomponente

25 kg Äpfel (gleichmäßiges Gemisch der Sorten Gloster und Boskoop) werden nach dem Waschen in einer Rätzmühle gemahlen und nach Zugabe und Einmischen von 0,15% Ascorbinsäure (in Apfelsaft gelöst) und 0,1% eines handelsüblichen mazerierenden Enzyms ohne Rühren bei ca. 20°C für 90 min stehen gelassen. Anschließend wird die gesamte Maische durch ein Sieb mit 2 mm Lochgröße passiert. Das erhaltene Mus wird zur besseren Fließfähigkeit mit der gleichen Menge an geeignetem Wasser versetzt, im Vakuum entgast, mittels Röhrenwärmetauscher auf 88°C erhitzt (auch zur Inaktivierung der zugesetzten Enzyme) und nach Rückkühlung steril eingelagert.

### b) Verschnitt mit trubarmer Komponente

Die unter a) hergestellte, mit Wasser versetzte Ganzfruchtzubereitung wird zur Zerkleinerung der vorhandenen Trubteilchen mittels Hochdruckhomogenisation behandelt und zur Abtrennung des instabilen Trubes separiert. Zur Herstellung eines Apfelnektars erfolgt die Ausmischung der Trubkomponente mit Apfelsaftkonzentrat (handelsübliche Ware; 71°Brix) mit einer Trübung von 110 TE/F unter Mitverwendung von Apfelsaftaroma, entmineralisiertem Wasser, Invertzuckerlösung und 250 mg/l Ascorbinsäure auf Trinkstärke von 11,2°Brix in der Form, daß ein Apfelsaftgehalt (bestehend aus Trubkomponente und Apfelsaftkonzentrat) von 50% resultiert. Die Trübung des Endproduktes liegt bei 550 TE/F, der Wert für delta Tz bei 58% und der Anteil der unverdünnten Trubkomponente (bezogen auf das Endprodukt Apfelnektar) bei 15%. Trübung, Trubstabilität und die weiteren eingangs erwähnten Qualitätskriterien entsprechen denen konventionell hergestellter naturtrüber Apfelnektare.

### Beispiel 5:

Herstellung eines naturtrüben Birnensaftes unter Verwendung einer Birnenganzfruchtzubereitung (als Trubkomponente) und Birnensaftkonzentrat (71°Brix)

### a) Herstellung der Trubkomponente

20 kg Birnen werden nach dem Waschen in einer Rätzmühle gemahlen und nach Zugabe von 0,1% Ascorbinsäure (in Wasser gelöst) ohne Rühren bei ca 15°C für 150 min stehen gelassen. Anschließend wird die gesamte Maische durch ein Sieb mit 2 mm Lochgröße passiert. Das erhaltene Mus wird zur besseren Fließfähigkeit mit der gleichen Menge an geeignetem Wasser versetzt, homogenisiert, im Vakuum entgast, mittels Röhrenwärmeaustauscher auf 88°C erhitzt und nach Rückkühlung steril eingelagert.

### b) Verschnitt mit trubarmer Komponente

Die unter a) hergestellte, mit Wasser versetzte Birnenganzfruchtzubereitung wird zur Abtrennung des instabilen Trubes separiert. Anschließend wird mit Birnensaftkonzentrat (handelsübliche Ware; 71°Brix) mit einer Trübung von 1 TE/F unter Mitverwendung von Birnensaftaroma, geeignetem Wasser und 300 mg/l Ascorbinsäure auf Trinkstärke von 11,4°Brix ausgemischt. Die Trübung des Endproduktes liegt bei 675 TE/F. Der Anteil der unverdünnten Trubkomponente liegt bei 22,7%.

Über die Lagerzeit von 15 Monaten ergibt sich eine Reduzierung der stabilen Trübung und ein leichter Trubabsatz. Es ist jedoch keine Ausklarung des Produktes zu beobachten. Die Art und Menge dieses Trubabsatzes ist auch hier mit konventionell hergestelltem naturtrüben Birnensaft vollkommen vergleichbar.

## Patentansprüche

1. Verfahren zur Herstellung eines naturtrüben, trubstabilen Fruchtgetränks, wobei eine Trubkomponente des Getränks mit einer trubarmen Komponente des Getränks ohne den Zusatz eines Trubstabilisierungsmittels gemischt wird,
**dadurch gekennzeichnet,**
daß die nicht konzentrierte Trubkomponente in einem Anteil kleiner als 50 % mit der trubarmen Komponente in einem Anteil größer als 50 % gemischt wird und daß als trubarme Komponente ein handelsübliches, lagerfähiges Fruchtsaft-Vollkonzentrat verwendet wird.

2. Verfahren nach Anspruch 1,
**dadurch gekennzeichnet**,
daß als Trubkomponente eine durch Passieren erhaltene Ganzfruchtzubereitung (Mus) verwendet wird.

3. Verfahren nach Anspruch 2,
**dadurch gekennzeichnet**,
daß die Ganzfruchtzubereitung in einem Anteil kleiner als 22 % verwendet wird, Rest trubarme Komponente.

4. Verfahren nach Anspruch 1,
**dadurch gekennzeichnet**,
daß als Trubkomponente ein durch mechanische Trennverfahren erhaltener Saft verwendet wird.

5. Verfahren nach Anspruch 4,
**dadurch gekennzeichnet**,
daß ein stark trüber Saft verwendet wird mit einem Trubgehalt ausgedrückt in einem Trübungswert größer als 1.500 TE/F (Trübungseinheiten/Formazin).

6. Verfahren nach Anspruch 4 oder 5,
**dadurch gekennzeichnet**,
daß der Saft in einem Anteil kleiner als 35 % verwendet wird, Rest trubarme Komponente.

7. Verfahren nach einem der Ansprüche 1 bis 6,
**dadurch gekennzeichnet**,
daß bei der Herstellung zur Steigerung der Trubausbeute und der Trubstabilität die Maische vor der Entsaftung einer Standzeit unterworfen wird, die vorzugsweise zwischen etwa einer Stunde und etwa acht Stunden beträgt.

8. Verfahren nach Anspruch 7,
**dadurch gekennzeichnet**,
daß die Produkt-Temperatur während der Standzeit zwischen etwa 10 und 45°C liegt.

9. Verfahren nach einem der Ansprüche 1 bis 8,
**dadurch gekennzeichnet**,
daß die Trubkomponente und die trubarme Komponente aus der gleichen Fruchtsorte oder aus verschiedenen Fruchtsorten gewonnen werden.

10. Verfahren nach einem der Ansprüche 1 bis 9,
**dadurch gekennzeichnet**,
daß die Trubteilchen der Trubkomponente vor der Mischung zerkleinert werden, wobei vorzugsweise auf eine Partikelgröße kleiner als 50 µm, abermals vorzugsweise kleiner als 10 µm zerkleinert wird, und wobei das Naßzerkleinern vorzugsweise mit Hilfe von Hochdruckhomogenisatoren oder Kolloidmühlen oder anderen physikalischen Verfahren durchgeführt wird.

11. Verfahren nach einem der Ansprüche 1 bis 10,
**dadurch gekennzeichnet**,
daß der Trubkomponente wenigstens ein zur Steigerung der Saft- und/oder Trubausbeute geeignetes Enzym zugegeben wird.

12. Verfahren nach einem er Ansprüche 1 bis 11,
**dadurch gekennzeichnet**,
daß als trubarme Komponente ein Fruchtsaftkonzentrat verwendet wird mit einem Trubgehalt, ausgedrückt in einem Trübungswert kleiner als 250 TE/F (Trübungseinheiten / Formazin).

13. Verfahren nach einem der Ansprüche 11 bis 12,
**dadurch gekennzeichnet**,
daß der Konzentrierungsgrad bis zu einem Gehalt an gelöster Trockensubstanz von 80 Grad Brix reicht.

14. Verfahren nach einem der Ansprüche 1 bis 13,
**dadurch gekennzeichnet**,
daß vor oder nach dem Mischen der beiden Komponenten Zerkleinerungsverfahren, vorzugsweise wie in Anspruch 10 beschrieben, Verwendung finden, und/oder Separierverfahren, beispielsweise Zentrifugieren.

15. Verfahren nach einem der Ansprüche 1 bis 14,
**dadurch gekennzeichnet**,
daß der Mischung das bei der Herstellung von Fruchtsaftkonzentrat gewonnene Aroma, im Falle von Fruchtsaft oder Fruchtnektar aus der namensgebenden Frucht, zugegeben wird.

16. Verfahren nach einem der Ansprüche 1 bis 15,
**dadurch gekennzeichnet**,
daß die Mischung entgast wird, wobei die Entgasung vorzugsweise auf einen Restsauerstoffgehalt kleiner als 1 mg/l erfolgt.

17. Fruchtgetränk, hergestellt nach dem Verfahren nach einem oder mehreren der Ansprüche 1 bis 16,
**dadurch gekennzeichnet**,
daß das Fruchtgetränk einen Saftgehalt größer oder gleich 50 % aufweist.

18. Fruchtgetränk, hergestellt nach dem Verfahren nach einem oder mehreren der Ansprüche 1 bis 17,
**dadurch gekennzeichnet**,
daß sein Trubgehalt ausgedrückt in einem Trübungswert zwischen 200 und 1.500 TE/F (Trübungseinheiten / Formazin) beträgt, vorzugsweise zwischen 300 und 1.000 TE/F.

## Claims

1. Process for preparing a fruit beverage with a stable natural cloud through mixing a clouding component of the beverage with a low-cloudiness component of the beverage, without adding a cloud stabilisation agent, characterised in that a proportion of the non-concentrated clouding component which is less than 50% is mixed with a proportion of the low-cloudiness component which exceeds 50% and that a standard, storable fruit juice full concentrate is used as the low-cloudiness component.

2. Process according to Claim 1, characterised in that a whole fruit preparation (fruit puree) obtained through straining is used as the clouding component.

3. Process according to Claim 2, characterised in that the proportion of whole fruit preparation used is less than 22%, with the remainder being a low-cloudiness component.

4. Process according to Claim 1, characterised in that a juice obtained by means of mechanical separating processes is used as the clouding component.

5. Process according to Claim 4, characterised in that a juice with a high level of cloudiness is used, the cloud content of which is expressed as a cloudiness value and is greater than 1500 cloudiness units / formazin.

6. Process according to Claim 4 or 5, characterised in that the proportion of juice used is less than 35%, the remainder being a low-cloudiness component.

7. Process according to one of Claims 1 to 6, characterised in that, during preparation, the mash is left to stand for a period, which should preferably be between one hour and eight hours, before the juice is extracted, in order to increase the cloud yield and the cloud stability.

8. Process according to Claim 7, characterised in that the temperature of the product lies between approximately 10 and 45° C during its standing period.

9. Claim according to one of Claims 1 to 8, characterised in that the clouding component and the low-cloudiness component are obtained from the same fruit variety or from a number of different fruit varieties.

10. Process according to one of Claims 1 to 9, characterised in that the clouding component particles are reduced in size prior to mixing, preferably to a particle size which is smaller than 50 µm and then once again to a size which is preferably smaller than 10 µm, and whereby the wet crushing is preferably carried out with the aid of high-pressure homogenisers or colloid mills or other physical methods.

11. Process according to one of Claims 1 to 10, characterised in that at least one enzyme which is suitable for increasing the juice and/or cloud yield is added to the clouding component.

12. Process according to one of Claims 1 to 11, characterised in that a fruit juice concentrate is used as the low-cloudiness component, the cloud content of which is expressed as a cloudiness value and is less than 250 cloudiness units / formazin.

13. Process according to one of Claims 11 to 12, characterised in that the level of concentration reaches a content of dissolved dry substance of 80 degrees Brix.

14. Process according to one of Claims 1 to 13, characterised in that size reduction processes, preferably as described in Claim 10, and / or separation processes such as centrifuging are used either before or after the mixing of the two components.

15. Process according to one of Claims 1 to 14, characterised in that the aroma which is obtained during the preparation of fruit juice concentrate, in the case of fruit juice or fruit nectar from the fruit which gives it its name, is added to the mixture.

16. Process according to one of Claims 1 to 15, characterised in that gas is removed from the mixture, preferably leaving a residual oxygen content which is less than 1 mg/l.

17. Fruit beverage, prepared according to the process described in one or several of Claims 1 to 16, characterised in that the fruit beverage has a juice content greater than or equal to 50%.

18. Fruit beverage, prepared according to the process described in one or several of Claims 1 to 17, characterised in that its cloud content, expressed as a cloudiness value, is between 200 and 1500 cloudiness units / formazin and preferably between 300 and 1000 cloudiness units / formazin.

## Revendications

1. Procédé de préparation d'une boisson aux fruits ayant un trouble naturel et stable, dans lequel un composant de trouble de la boisson est mélangé à un composant à faible teneur en trouble de la boisson sans ajout d'un agent de stabilisation du trouble, caractérisé en ce que le composant de trouble non concentré en une quantité inférieure à 50% est mélangé avec le composant à faible teneur en trouble en une quantité supérieure à 50% et en ce que l'on utilise comme composant à faible teneur en trouble un concentré entier de jus de fruit couramment disponible dans le commerce et pouvant être stocké.

2. Procédé selon la revendication 1, caractérisée en ce que l'on utilise comme composant de trouble une préparation pur fruit (compote) obtenue par tamisage.

3. Procédé selon la revendication 2, caractérisé en ce que la préparation pur fruit est utilisée en une quantité inférieure à 22%, le reste étant le composant à faible teneur en trouble.

4. Procédé selon la revendication 1, caractérisé en ce que l'on utilise comme composant à faible teneur en trouble un jus obtenu par un procédé de séparation mécanique.

5. Procédé selon la revendication 4, caractérisé en ce que l'on utilise un jus à forte teneur en trouble ayant une teneur en trouble exprimée par une valeur de turbidité supérieure à 1500 UT/F (unités de turbidité/formazine).

6. Procédé selon la revendication 4 ou la revendication 5, caractérisé en ce que le jus est utilisé en une quantité inférieure à 35%, le reste étant le composant à faible teneur en trouble.

7. Procédé selon l'une des revendications 1 à 6, caractérisé en ce que, pour augmenter le rendement de trouble et la stabilité du trouble lors de la fabrication, le moût est soumis avant la récupération du jus à un temps de séjour de préférence compris entre environ une heure et environ huit heures.

8. Procédé selon la revendication 7, caractérisé en ce que la température du produit pendant le temps de séjour est comprise entre environ 10 et 45°C.

9. Procédé selon l'une des revendications 1 à 8, caractérisé en ce que composant de trouble et le composant à faible teneur en trouble sont obtenus à partir de la même sorte de fruit ou bien à partir de sortes de fruits différentes.

10. Procédé selon l'une des revendications 1 à 9, caractérisé en ce que les particules de trouble du composant de trouble sont broyées avant le mélange, le broyage se faisant de préférence à une taille de particules inférieure à 50 µm, et de préférence inférieure à 10 µm, le broyage en conditions humides se faisant de préférence au moyen d'homogénéisateurs à haute pression ou de broyeurs colloïdaux ou d'autres procédés physiques.

11. Procédé selon l'une des revendications 1 à 10, caractérisé en ce que l'on ajoute au composant de trouble au moins une enzyme appropriée pour augmenter le rendement en jus et/ou en trouble.

12. Procédé selon l'une des revendications 1 à 11, caractérisé en ce que l'on utilise comme composant à faible teneur en trouble un concentré de jus de fruit ayant une teneur en trouble exprimée par une valeur de turbidité inférieure à 250 UT/F (unités de turbidité/formazine).

13. Procédé selon l'une des revendications 1 à 12, caractérisé en ce que le degré de concentration va jusqu'à une teneur en matière sèche dissoute de 80 degrés Brix.

14. Procédé selon l'une des revendications 1 à 13, caractérisé en ce que l'on utilise avant ou après le mélange des deux composants des procédés de broyage, de préférence tels que décrits dans la revendication 10, et/ou des procédés de séparation, par exemple la centrifugation.

15. Procédé selon l'une des revendications 1 à 14, caractérisé en ce que l'on ajoute au mélange l'arôme obtenu lors de la fabrication du concentré de jus de fruit à partir du fruit donnant la dénomination dans le cas de jus de fruit ou de nectar de fruit.

16. Procédé selon l'une des revendications 1 à 15, caractérisé en ce que le mélange est dégazé, le dégazage se faisant de préférence à une teneur résiduelle en oxygène inférieure à 1 mg/l.

17. Boisson aux fruits fabriquée selon le procédé décrit dans une ou plusieurs des revendications 1 à 16, caractérisée en ce que ladite boisson aux fruits présente une teneur en jus supérieure ou égale à 50%.

18. Boisson aux fruits fabriquée selon le procédé décrit dans une ou plusieurs des revendications 1 à 17, caractérisée en ce que sa teneur en trouble exprimée par une valeur de turbidité se situe entre 200 et 1500 UT/F (unités de turbidité/formazine), de préférence entre 300 et 1000 UT/F.
